# EUROPÄISCHE PATENTSCHRIFT

(11) **EP 0 851 825 B1**
(45) Veröffentlichungstag und Bekanntmachung des Hinweises auf die Patenterteilung: **01.03.2000**
(21) Anmeldenummer: 96938932.9
(22) Anmeldetag: 11.09.1996
(51) Int. Cl.: B62K 15/00

(54) **KLAPPRAD**
FOLDING BICYCLE
BICYCLETTE PLIABLE

(30) Priorität: 12.09.1995 DE 19533480
(43) Veröffentlichungstag der Anmeldung: 08.07.1998
(73) Patentinhaber: Hackert, Denys F., 70176 Stuttgart (DE); DaimlerChrysler AG, 70567 Stuttgart (DE)
(72) Erfinder: Hackert, Denys F., 70176 Stuttgart (DE); DaimlerChrysler AG, 70567 Stuttgart (DE)
(74) Vertreter: Schuster, Gregor, Dipl.-Ing.
(86) Internationale Anmeldenummer: DE9601707
(87) Internationale Veröffentlichungsnummer: WO9710141

(56) Entgegenhaltungen:
- EP-A- 0 129 164
- EP-A- 0 565 760
- DE-A- 3 111 358
- DE-A- 4 423 647
- GB-A- 2 287 438

## Beschreibung

Die Erfindung geht aus von einem Klapprad nach DE A 3111358.

Ein solches Klapprad soll in zusammengeklapptem Zustand, also nach Einklappung ein möglichst geringes Volumen aufweisen, um insbesondere im Kofferraum eines PKW untergebracht werden zu können. Außerdem soll der technische Herstellungsaufwand möglichst gering sein und es soll außerdem mit einem Minimum an Handlingsaufwand ein- bzw. ausklappbar sein. Hinzu kommt, daß ein solches Klapprad ausreichend stabil sein muß, den Sicherheitsvorschriften an ein Straßenfahrzeug genügen muß und ein möglichst geringes Gesamtgewicht aufweisen soll, um beispielsweise in einer Tragtasche leicht getragen und transportiert werden zu können beispielsweise auch in öffentlichen Verkehrsmitteln. Eine solche Vielzahl von Forderungen verlangt naturgemäß Kompromisse in der Konstruktion, weshalb ein verhältnismäßig großer Stand der Technik an derartigen Klapprädern vorhanden ist mit unterschiedlicher Gewichtung bei der Zielsetzung.

Bei einem bekannten gattungsgemäßen Klapprad (EP-OS 0 565 760) ist der rohrförmige Rahmen derart ausgebildet bzw. die Stützstrebe des viereckigen Rahmens so weit nach innen gewölbt, daß das Hinterrad in diese Ausnehmung schwenkbar ist, so daß in eingeklapptem Zustand Vorderrad und Hinterrad in einer Ebene hintereinander angeordnet sind. Zwar wird dadurch erreicht, daß die ganze Antriebseinrichtung, wie Kette, Gangschaltung und dergleichen, sowie die Hinterradbremse und das Hinterrad nicht demontiert werden müssen, was häufig mit Verschmutzen der Hände und möglicherweise Kleider verbunden ist und beim Wiederzusammenbau eine Neujustierung von Bremse und Schaltmechanik erfordert - es wird jedoch nur verhältnismäßig wenig Raumvolumen durch den Klappvorgang eingespart. Ein weiterer Nachteil besteht darin, daß die Drehachse des Schwenklagers koaxial zu jener des Triebwerks verläuft. Aufgrund der begrenzten Baubreite des Tretlagers des Triebwerks (ca. 60 mm), die noch dazu in 3 Teile (Schwenklager - Rahmen - Schwenklager) aufgeteilt werden muß, ergibt sich eine aufwendige und trotzdem instabile Drehpunktkonstruktion.

Bei einem anderen bekannten Klapprad (EP-PS 0 103 609) das nur für kleine Raddurchmesser geeignet ist, besteht der Rahmen aus drei schalenförmigen Teilen, von denen ein Teil Triebwerk und Hinterrad, ein anderes den Sattel und ein Drittes das Lager der Vorderradlenkung trägt, wobei zum Einklappen diese drei Teile um eine Achse schwenkbar zusammengeklappt werden und wonach die Sattelstange und Lenkstange eingeschoben und die zwei Räder eingeklappt werden. Zwar ist das endgültige Klappradvolumen in eingeklapptem Zustand äußerst gering, allerdings auf Kosten eines sehr großen technischen Aufwandes. Nicht zuletzt wirken sich die vielen Schwenkachsen destabilisierend aus, abgesehen davon, daß das Klapprad in ausgeklapptem Zustand und entsprechender Belastung durch einen Fahrer eine Übergewichtung der Vorderachse erhält.

Bei einem anderen bekannten Klapprad mit notwendigerweise extrem kleinem Raddurchmesser (DE-OS 43 13 832) verläuft die Drehachse der Hinterradschwinge nicht parallel zu der des Triebwerks und des Hinterrads, so daß jede Schwenkbewegung der Hinterradschwinge eine Lenkbewegung des Hinterrads auslöst. Deshalb sind bei diesem Klapprad nur kleine Federwege (< 20 mm) möglich. Außerdem führt jede Schwenkbewegung der Hinterradschwinge zu einer Veränderung des Abstands zwischen Tretlager und Hinterradachse und somit zu wechselnder Kettenspannung, was nur teilweise durch die im Schaltwerk befindliche Feder ausgeglichen werden kann.

Bei einem weiteren bekannten Klapprad (DE OS 44 00 500) werden ausgehend von einem Rahmen mit gefedertem Hinterrad zwei Varianten beschrieben, wie das Fahrrad zusammengeklappt werden kann. Entweder wird das Hinterrad ausgebaut, der Hinterbau entriegelt und nach oben geschwenkt, so daß die Schwingenarme neben der Sattelstütze liegen kommen. Alternativ ist die Sattelstütze zweigeteilt, so daß sie das Hinterrad aufnehmen kann, wenn die Hinterradschwinge nach oben geklappt wird. Beiden Varianten gemeinsam ist, daß das Volumen des Fahrrades in zusammengeklappterm Zustand nicht wesentlich kleiner als im ausgeklappten Zustand ist. Die erste Variante ist noch dazu sehr bedienungsunfreundlich, während die zweite sehr aufwendig in der Herstellung ist.

Das erfindungsgemäße Klapprad mit den kennzeichnenden Merkmalen des Hauptanspruchs hat demgegenüber den Vorteil, daß das Klapprad auch bei Verwendung von normalen Raddurchmessern (26"oder 28") in eingeklappem Zustand ein Volumen aufweist, dessen Durchmesser nur unwesentlich größer als der Durchmesser von Hinterrad oder Vorderrad ist. Hinzu kommt, daß der Klappmechanismus in äußerst einfacher Art durchgeführt werden kann, daß also ein solches Klapprad preisgünstig herstellbar ist. Nicht zuletzt bietet die erfindungsgemäße Konstruktion die Möglichkeit einer äußerst ästhetischen Gestaltung und ein Minimum an Aufwand beim Zusammenklappen des Rades, insbesondere ohne die Gefahr der Verschmutzung der Hände. Besonders vorteilhaft ist, daß nur ein Rahmen mit nur einer Längsausdehnung erforderlich ist. Das Verbinden von möglicherweise gleichwertig nebeneinander bestehenden Rahmenteilen, wie es bei den bekannten Klapprädern gegeben ist und welches zu konstruktivem Mehraufwand und Nachteilen führt, ist bei der Erfindung vorteilhafterweise nicht erforderlich und auch nicht gegeben. Wichtig für die kompakte Einklappung ist, daß das Schwenklager des das Hinterrad tragenden Trägerteils nahe der Drehachse des Triebwerkes ist, um dadurch zu erreichen, daß nach dem Einklappvorgang die Achse des Hinterrades etwa auf der Höhe der Achse des Vorderrades ist bzw. daß das Hinterrad in den Raum aufgenommen wird, in dem vorher das Vorderrad war. Das Vorderrad kann gegebenenfalls gelöst und daneben angeordnet werden. Durch die Integration des Triebwerks in der Schwinge ergibt sich ein konstanter Abstand zwischen Drehachse des Triebwerks und Hinterradachse, wodurch die Kettenführung und -spannung bein Klappvorgang nicht beeinflußt wird und die Hinterradschwinge wird, insbesondere bei zweiarmiger Ausführung versteift.

Nach einer vorteilhaften Ausgestaltung der Erfindung verläuft die Drehachse des Schwenklagers parallel zu jener des Triebwerks. Hierdurch wird beim Zusammenklappen Trägerteil und Hinterrad in der Ebene des Fahrrads von hinten nach vorne geschwenkt, wobei der Schwenkbereich mehr als 180° betragen kann. Da als Trägerteil eine Schwinge dient, an der das Hinterrad angeordnet ist und nicht wie beim Stand der Technik ein Rohrgestell mit Dreieckskonstruktion, welches Hinterradaufnahme, Tretlager und Sattelklemmung verbindet, ist nach Einschwenken des Hinterrades kein zusätzlich störendes Rahmenelement vorhanden. Der gesamte, hinter dem Schwenklager liegende Klappradteil ist wegklappbar.

Nach einer weiteren vorteilhaften Ausgestaltung der Erfindung ist die Drehachse für das Schwenklager der Hinterradschwinge nahe dem Triebwerk angeordnet, so daß das Volumen in zusammengeklapptem Zustand gering ist und im Falle eines gefederten Hinterrades die in der Regel unerwünschte Selbstverhärtung der Hinterradfederung beim Wiegetritt nahezu vollständig vermieden wird.

Nach einer weiteren vorteilhaften Ausgestaltung der Erfindung ist der Schwenkweg der Radschwinge in Richtung Ausklappung, also in Funktionsbetrieb des Klapprads durch einen zwischen Rahmen und Radschwinge vorhandenen Anschlag begrenzbar. Vorteilhafterweise wirken sich beim Fahren die am Hinterrad und an der Radschwinge angreifenden Kräfte in Richtung Anschlag aus, so daß auch ohne sonstige Zusatzverriegelungen ein günstiger Formschluß vorhanden ist. Bei dem einen bekannten Klapprad (EP-PS 0 103 609) muß beispielsweise die ganze Last von einem Riegel getragen werden, über den die als Rahmenteil ausgebildete Schwinge zu einem anderen Rahmenteil verriegelbar ist.

Nach einer weiteren vorteihaften Ausgestaltung der Erfindung ist der Anschlag federnd ausgebildet. Eine solche Federung kann in Form einer als Patrone eingesetzten Gasfeder oder als Feder-Dämpfungselement ausgebildet sein oder auch in Form einer Schwingmetallkonstruktion oder eines Zellschaumelastomers.

Nach einer weiteren vorteilhaften Ausgestaltung der Erfindung ist der Anschlag zur Änderung des Schwenkwegs verstellbar ausgebildet. Hierdurch kann gleichzeitig die Bodenfreiheit des Triebwerks geändert werden, was beispielsweise bei der Verwendung als Geländefahrrad von Vorteil ist.

Nach einer weiteren vorteilhaften Ausgestaltung der Erfindung ist mindestens eine der Endschwenklagen der Radschwinge arretierbar, was sowohl für den eingeschwenkten als auch den ausgeschwenkten Zustand möglich wäre.

Nach einer weiteren alternativen Ausgestaltung der Erfindung verläuft die Drehachse des Schwenklagers bei fahrbereitem Klapprad im wesentlichen vertikal, wobei der Rahmen und das Trägerteil nahe dem Triebwerk in der lotrecht zur Drehachse verlaufenden Ebene verbunden sind, wobei eine die beiden Teile zusammenspannende und entriegelbare Vorrichtung am Drehachslager vorhanden ist. Eine solche an sich bekannte (EP-OS 0 129 164) Anordnung der Drehachse hat bei dem erfindungsgemäßen Klapprad den Vorteil, daß das Hinterrad ohne den Sattel einklappbar ist, da dieser nicht mit der Schwinge verbunden ist.

Nach einer weiteren vorteilhaften Ausgestaltung der Erfindung, die auch für sich geltend gemacht wird, ist der Sattelträger als Sattelschwinge ausgebildet, die einerseits schwenkbar am Rahmen angelenkt ist und andererseits den Sattel trägt. Eine solche Schwinge kann je nach Gestaltung ihres Schwenklagers so verschwenkt werden, daß der Sattel nach oben oder nach unten geschwenkt wird, je nachdem bei welcher konstruktiven Ausführung ein geringeres Endvolumen erzielbar ist.

Nach einer weiteren vorteilhaften Ausgestaltung der Erfindung ist die Betriebslage der Sattelschwinge durch einen Anschlag begrenzt. Je nach Art des Schwenklagers wird die Sattelschwinge bei belastetem Sattel auf den Anschlag gedrückt, oder es ist eine Verriegelung erforderlich, die die Sattelschwinge in der Betriebslage am Anschlag hält.

Nach einer weiteren vorteilhaften Ausgestaltung der Erfindung ist die Sattelschwinge in bezug auf den Rahmen federnd ausgebildet. Es ist jedoch auch möglich, die Sattelschwinge in sich elastisch zu gestalten, so daß sie federnd wirkt. In Abstimmung mit der Federung der Hinterradschwinge kann so auch für unwegige Gelände oder holprige Straßen ein optimales Stoßdämpfersystem erzielt werden, ohne daß deshalb die Straßenlage des Klapprads verschlechtert wird.

Nach einer weiteren vorteilhaften Ausgestaltung der Erfindung ist die Sattelschwinge nach Entriegelung für die Einklappung in Richtung Hinterrad (nach unten) schwenkbar. Im Normalfall dürfte dieses zu dem geringsten Endvolumen führen.

Weitere Vorteile und vorteilhafte Ausgestaltungen der Erfindung sind der nachfolgenden Beschreibung, der Zeichnung und den Ansprüchen entnehmbar.

### Zeichnung

Zwei Ausführungsbeispiele des Gegenstandes der Erfindung sind in der Zeichnung dargestellt und im folgenden näher beschrieben. Es zeigen:
- Fig. 1: ein Klapprad in ausgeklapptem Zustand
- Fig. 2 + 3: in Zwischenklappstellungen,
- Fig. 4: in eingeklapptem Zustand und
- Fig. 5 + 6: das zweite Ausführungsbeispiel in Zwischenklappzuständen.

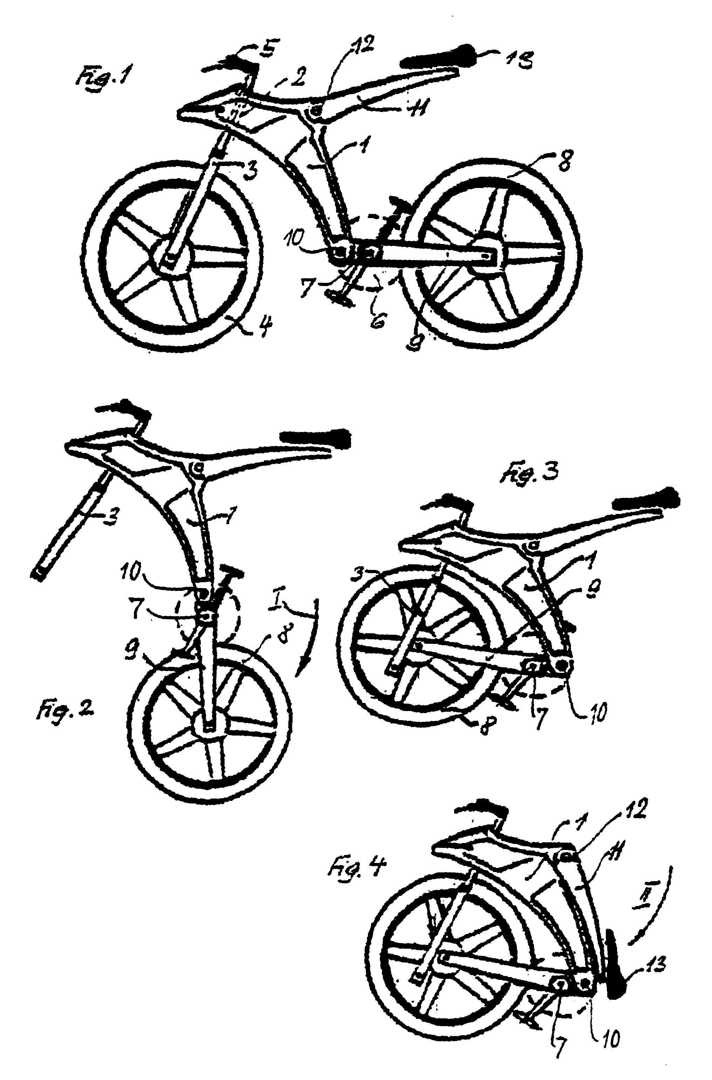

Bei dem in den Fig. 1 bis 4 dargestellten ersten Ausführungsbeispiel ist an einem als Profilteil hergestelltem Rahmen 1 über ein Drehlager 2 die Gabel 3 eines Vorderrades 4 angeordnet, welches über eine Lenkstange 5 steuerbar ist. Am unteren Ende des Rahmens 1 ist ein Triebwerk 6 mit einem Drehlager 7 angeordnet, über welches in üblicher Weise ein Hinterrad 8 antreibbar ist, das am Ende einer Radschwinge 9 getragen wird. Die Radschwinge 9 ist andererseits über ein am Rahmen 1 augeordnetes Schwenklager 10 nahe dem Drehlager 7 verschwenkbar gelagert und befestigt, wobei die Drehachsen von Drahlager 7 und Schwenklager 10 parallel zueinander verlaufen. Die Drehachse des Drehlagers 2 ist hingegen rechtwinklig zu jener des Drehlagers 7 am Rahmen 1 angeordnet. Selbstverständlich können Rahmen und Radschwinge auch als Rohrkonstruktion ausgeführt werden. Im Bereich zwischen den Drehlagern 2 und 7 ist am Rahmen eine Sattelschwinge 11 auf einem Schwenklager 12 angelenkt, an deren freiem Ende der Sattel 13 befestigt ist. In diesem ausgeklappten Zustand unterscheidet sich äußerlich das erfindungsgemäße Klapprad nur wenig von einem üblichen Rad, abgesehen davon, daß aufgrund der geringen Anzahl an raumbildenden Konstruktionsteilen der Eindruck eines sehr leichten Fahrzeuges entsteht. Tatsächlich besteht aber der Eingangs beschriebene wesentliche erfindungsgemäße Unterschied.

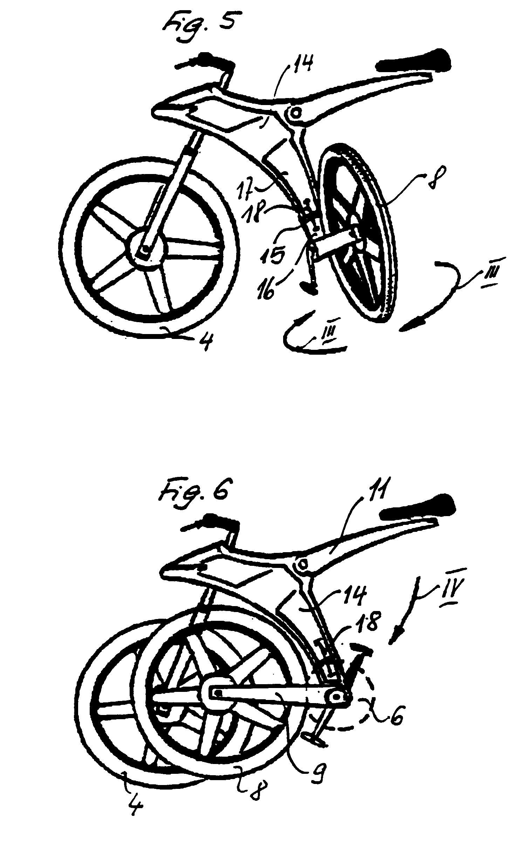

In den Fig. 2 und 3 wird die fortschreitende Einklappung des Fahrrads beschrieben. In Fig. 2 ist das Vorderrad 4 von der Gabel 3 entfernt und es ist das Hinterrad 8 mit Radschwinge 9 um etwa 90° aus der ursprünglichen Position verschwenkt gezeigt, gemäß dem Pfeil I und zwar verschwenkt um das Schwenklager 10. In Fig. 3 ist das Hinterrad 8 mit Radschwinge 9 nunmehr so weit verschwenkt, daß es in etwa die ursprüngliche Lage des Vorderrades 4 einnimmt. Hierbei ist es in die offene Gabel 3 des Vorderrades hineingeschwenkt.

In Fig. 4 ist das Klapprad in eingeklapptem Zustand dargestellt, in dem gemäß Pfeil II nunmehr auch die Sattelschwinge 11 mit Sattel 13 um das Schwenklager 12 an den Rahmen 1 herangeschwenkt wurde.

Das in Fig. 4 gezeigte eingeklappte Klapprad läßt sich bequem in einem Kofferraum eines Autos verstauen oder in einer Tragtasche verpacken. Um das Klapprad wieder auszuklappen, werden in umgekehrter Reihenfolge zuerst die Sattelschwinge 11 und danach das Hinterrad 8 zurückgeschwenkt, bevor dann das Vorderrad 4 wieder eingesetzt wird.

Bei dem in Fig. 5 dargestellten zweiten Ausführungsbeispiel sind die gleichen Teile mit den gleichen Bezugszahlen versehen und nur geänderte oder neue Teile mit fortlaufenden Bezugszahlen. Der Rahmen 14 ist bei diesem Ausführungsbeispiel in einer Ebene 15 mit dem Trägerteil 9 um eine Drehachse 18 schwenkbar verbunden. Die die beiden Teile 9 und 14 zusammenspannende sowie entriegelbare Vorrichtung ist nicht näher erläutert. Zum Einklappen wird das Hinterrad 8 um die Drehachse 18 entsprechend dem Pfeil III und nach Lockern der Verriegelung aus der in Fig. 1 dargestellten Betriebsstellung in die in Fig. 6 dargestellte Stellung verschwenkt, bei der die beiden Räder, nämlich das Vorderrad 4 und das Hinterrad 8 nahezu parallel zueinander angeordnet sind. Bei diesem Ausführungsbeispiel braucht das Vorderrad für das Einklappen des Klapprades nicht entfernt zu werden. Wenn endlich noch die Sattelschwinge 11 entsprechend dem Pfeil IV eingeschwenkt wird, ist das Klapprad endgültig eingeklappt. Tatsächlich kann das Schwenklager 12 im gesamten Bereich zwischen Drehlager 2 und Schwenklager 10 angeordnet sein, je nachdem wie groß der freie Durchstieg sein soll. Wenn das Schwenklager 12 in der Näher des Schwenklagers 10 angeordnet ist, kann die Einklappung der Sattelschwinge 11 in Richtung des Hinterrads dergestalt erfolgen, daß das Hinterrad sich bereits in eingeklapptem Zustand in der Nähe des Vorderrads 4 befindet und die Sattelschwinge 11 sich beim Einklappen dem Drehlager 2 annähert.

Alle in der Beschreibung, den nachfolgenden Ansprüchen und in der Zeichnung dargestellten Merkmale können sowohl einzeln als auch in beliebiger Kombination miteinander erfindungswesentlich sein.

### Bezugszahlenliste

- 1: Rahmen
- 2: Lager oder Drehlager
- 3: Gabel
- 4: Vorderrad
- 5: Lenkstange
- 6: Triebwerk
- 7: Drehlager oder Tretlager
- 8: Hinterrad
- 9: Hinterradschwinge oder Trägerteil
- 10: Schwenklager für Hinterradschwinge
- 11: Sattelschwinge oder Sattelträger
- 12: Schwenklager für Sattelschwinge
- 13: Sattel
- 14: Rahmen
- 15: Teilungsebene
- 16: -
- 17: -
- 18: Drehachse

## Patentansprüche

1. Klapprad, welches ein durch eine Lenkstange (5) steuerbares Vorderrad (4), ein über ein Triebwerk (6) antreibbares Hinterrad (8) und einen Sattel (13) aufweist, geeignet für normale Raddurchmesser (26"oder 28"),
- mit einem das Tretlager (7) des Triebwerks (6) und das bezüglich ihrer Drehachse quer dazu angeordnete Lager (2) der Vorderradlenkung verbindenden Rahmen (1, 14),
- mit einem mit dem Rahmen (1, 14) verbundenen Sattelträger (11),
- mit einem das Hinterrad (8) an den Rahmen (1, 14) anbindenden, dieses entsprechend tragenden Trägerteil (9) und
- mit einem Schwenklager (10) am Rahmen (1, 14), um dessen Drehachse das Trägerteil (9) mit Hinterrad (8) für den Klappvorgang schwenkbar ist, wobei die Drehachse (18) des Schwenklagers (10) außerhalb der Drehachse des Tretlagers (7) des Triebwerks (6) angeordnet ist und beim Zusammenklappen des Klapprades der Abstand zwischen dem Tretlager (7) des Triebwerks (6) und der Achse des Hinterrades (8) erhalten bleibt, und
- wobei nach dem Zusammenklappen des Klapprades das Trägerteil (9) und das Hinterrad (8) neben dem durch das Vorderrad (4) im auseinandergeklappten Zustand beanspruchten Raum angeordnet sind oder bei ausgebautem Vorderrad an dessen Stelle angeordnet sind,
dadurch gekennzeichnet,
- daß der Rahmen (1, 14) das Lager (2) der Vorderradlenkung und das Schwenklager (10) unmittelbar verbindet,
- daß das Trägerteil (9) als ein- oder zweiarmige Schwinge (9) ausgebildet ist,
- daß das Triebwerk an der Schwinge (9) angeordnet ist, und
- daß der Sattelträger (11) zwischen dem Lager (2) der Vorderradlenkung und dem Schwenklager (10) an dem Rahmen (1, 14) angeordnet ist.

2. Klapprad nach Anspruch 1, dadurch gekennzeichnet, daß die Drehachse (18) des Schwenklagers parallel zu jener des Triebwerks (6) und vorzugsweise in Richtung Vorderrad und/ oder nach unten verschoben verläuft.

3. Klapprad nach Anspruch 1 oder 2, dadurch gekennzeichnet, daß die Drehachse (18) für das Schwenklager (10) nahe dem Triebwerk (6) angeordnet ist.

4. Klapprad nach Anspruch 2, dadurch gekennzeichnet, daß der Schwenkweg der Radschwinge (9) in Richtung "Ausklappung" durch einen zwischen Rahmen (1) und Radschwinge (9) vorhandenen Anschlag begrenzbar ist.

5. Klapprad nach Anspruch 4, dadurch gekennzeichnet, daß der Anschlag federnd ausgebildet ist.

6. Klapprad nach Anspruch 4 oder 5, dadurch gekennzeichnet, daß der Anschlag zur Änderung des Schwenkwegs verstellbar ausgebildet ist.

7. Klapprad nach einem der Ansprüche 4 bis 6, dadurch gekennzeichnet, daß mindestens eine der Endschwenklagen der Radschwinge (9) arretierbar ist.

8. Klapprad nach Anspruch 1, dadurch gekennzeichnet, daß die Drehachse (18) des Schwenklagers bei fahrbereitem Klapprad im wesentlichen vertikal verläuft,
daß Rahmen (14) und Trägerteil (9) nahe dem Triebwerk (6) über ein verriegelbares Drehachslager in der lotrecht zur Drehachse (18) verlaufenden Ebene (15) verbunden sind und
- daß eine die beiden Teile zusammenspannende und entriegelbare Vorrichtung am Drehachslager vorhanden ist.

9. Klapprad nach einem der vorhergehenden Ansprüche, dadurch gekennzeichnet, daß der Sattelträger (11) als Sattelschwinge ausgebildet ist, die einerseits schwenkbar am Rahmen (1, 14) angelenkt ist und andererseits den Sattel (13) trägt.

10. Klapprad nach Anspruch 9, dadurch gekennzeichnet, daß die Betriebslage der Sattelschwinge (11) durch einen Anschlag begrenzt ist.

11. Klapprad nach Anspruch 9 oder 10, dadurch gekennzeichnet, daß die Sattelschwinge (11) in Bezug auf den Rahmen (1, 14) federnd ausgebildet ist.

12. Klapprad nach Anspruch 11, dadurch gekennzeichnet, daß die Sattelschwinge (11) nach Entriegelung für die "Einklappung" in Richtung Hinterrad (8) (nach unten) schwenkbar ist.

## Claims

1. Folding bicycle, which shows a front wheel (4) steerable by means of a handlebar (5), a rear wheel (8) motivated over a power plant (6), and a saddle (13), suitable for normal wheel diameter (26" or 28"),
- with bottom bearings (7) of the power plant (6) and the bearings (2) of the front wheel guide positioned diagonally to its rotary axle of the frame (1, 14), connecting the front wheel,
- with a saddle support (11) combined to the frame (1, 14),
- with a carrying device (9) combining the rear wheel (8) to the frame 1, 14), this in accordance with the carrying device (9), and
- with swivel bearings (10) at the frame (1, 14), with the carrying device (9) being swivelled around with the rear wheel (8) for the folding procedure, whereas the swivel axle (18) of the swivel bearings (10) is positioned exterior the pivoting axle of the bottom bracket bearings (7) of the driving unit (6), and when folding the folding bicycle the distance between the bottom bracket bearings (7) of the driving unit (6) and the axle of the rear wheel (8) remains, and
- whereas after folding the folding bicycle the carrying device (9) and the rear wheel (8) are positioned besides the space needed by the front wheel (4) in an unfolded condition, or be positioned at its place if the front wheel is taken off, characterized as far as
- the frame (1, 14) combines the bearings (2) of the front wheel guide and the swivel bearings (10) directly,
- the carrying unit (9) is constructed as a one or bi-armed swing (9,)
- the driving unit is positioned at the swing (9), and
- the saddle support (11) is positioned between the bearings (2) of the front wheel guide and the swivel bearings (10) at the frame (1, 14),

2. Folding bicycle according to title 1, caracterized as far as the swivel axle (18) of the swivel bearings runs parallel to the one of the driving unit (6), preferably in direction of the front wheel and/or downward.

3. Folding bicycle according to title 1 or 2, caracterized as far as the swivel axle (18) for the swivel bearings (10) is positioned close to the driving unit (6).

4. Folding bicycle according to title 2, characterized as far as the swivelling way of the wheel swing (9) is limited by a buffer in direction of the ,,folding out" between frame (1) and wheel swing (9).

5. Folding bicycle according to title 4, characterized as far as the buffer is a spring construction.

6. Folding bicycle according to title 4 or 5, characterized as far as the buffer for changing the swivel run is readjustable.

7. Folding bicycle according to one of the titles 4 to 6, characterized as far as one of the final rotary positions of the wheel swing (9) is lockable.

8. Folding bicycle according to title 1, characterized as far as the swivel axle (18) of the swivel bearings continues mostly vertical if the folding bicycle is ready to start, that frame (14) and carrying unit (9) are linked over a lockable swivel axle bearings close to the driving unit (6) in the swivel axle vertical to the surface (15), and that there is an unlockable device at the swivel axle bearings pressing together both parts.

9. Folding bicycle according to one of the preceding titles,
characterized as far as the saddle holder (11) is constructed as saddle swing being linked once to the frame (1, 14) and otherwise holding the saddle (13).

10. Folding bicycle according to title 9, characterized as far as the position of action of the saddle swing (11) is limited by a buffer.

11. Folding bicycle according to title 9 or 10, characterized as far as the saddle swing (11) is constructed springy as concerns the frame (1, 14).

12. Folding bicycle according to title 11, characterized as far as the saddle swing (11) can be rotated upon unlocking for the ,,snapping" in direction of the rear wheel (8) (downward).

## Revendications

1. Bicyclette pliable, qui montre une roue-avant (4), conductible par moyen d'un guidon (5), une arrière-roue (8) motivée sur l'engrenage (6), et une selle (13), convenable au diamètre de roue normale (26" ou 28"),
- avec un palier du pédalier (7) de l'engrenage (6) et les paliers (2) du guidon de l'avant-roue positionné diagonal à l'essieu pivotant du châssis (1, 14), attachant l'avant-roue,
- avec une selle support (11) combinée au châssis (1, 14),
- avec un support (9) attachant l'arrière-roue (8) au châssis (1, 14), bien en accordance avec le support (9), et
- avec palier pivotant (10) au châssis (1, 14), avec support (9) pivoté autour avec l'arrière-roue (8) pour faciliter le pliage, pendant que l'essieux pivotant (18) du palier pivotant (10) soit positionné à l'extérieur de l'essieu pivotant du palier du pédalier (7) de l'engrenage (6), et en pliant la bicyclette pliable la distance entre le palier du pédalier (7) de l'engrenage (6) et l'essieu de l'arrière-roue (8) reste le même, et
- cependant après pliant la bicyclette pliable l'unité de support (9) et l'arrière-roue (8) soient positionnés à coté de l'espace nécessaire par l'avant-roue (4) en condition dépliée, ou positionné à sa place si l'avant-roue est démontée, caractérisé du fait que
- le châssis (1, 14) attache le palier (2) de la guide de l'avant-roue directement au palier pivotant (10),
- l'unité de support (9) soit construite comme pivot à un bras ou à deux bras (9,)
- l'unité de commande soit positionnée au pivot (9), et
- le porteur de la selle (11) soit positionné entre le palier (2) de guidage d'avant-roue et le palier oscillant (10) au châssis (1, 14).

2. Bicyclette pliable selon titre 1, caractérisée du fait que l'essieu pivotant (18) du palier pivotant court parallel l'une des unités de conduite (6), préférablement en direction de l'avant-roue et/ou en bas.

3. Bicyclette pliable selon titre 1 ou 2, caractérisée du fait que l'essieu pivotant (18) pour le palier pivotant (10) soit positionné près de l'unité de commande (6).

4. Bicyclette pliable selon titre 2, caractérisée du fait que le chemin pivot de roue (9) soit limité par un arrêt en direction "déplier" entre châssis (1) et pivot de roue (9).

5. Bicyclette pliable selon titre 4, caractérisée du fait que l'arrêt soit une construction à ressort.

6. Bicyclette pliable selon titre 4 ou 5, caractérisée du fait que l'arrêt pour changer le chemin du pivot soit réajustable.

7. Bicyclette pliable selon un des titres 4 à 6, caractérisée du fait qu' une des positions de fin rotatif de la voie pivotante (9) soit arrêtable.

8. Bicyclette pliable selon titre 1, caractérisée du fait que l'essieu pivotant (18) du palier pivotant continue surtout verticalement si la bicyclette pliable soit prète à partir, que le châssis (14) et l'unité de support (9) soient combinés sur un essieu pivot arrêtable près à l'unité de commande (6) dans l'essieu pivotant vertical à la surface (15), et qu'il existe une disposition au palier de l'essieu pivotant pressant les deux parts et les désenclenchant.

9. Bicyclette pliable selon un des titres précédents, caractérisée du fait que le support de selle (11) soit construit comme balance attachée une fois au châssis (1, 14) et autre fois tenant la selle (13).

10. Bicyclette pliable selon titre 9, caractérisée du fait que la position d'action du pivot de selle (11) soit limitée par un arrêt.

11. Bicyclette pliable selon titre 9 ou 10, caractérisée du fait que la selle pivotante (11) soit construite balançant concernant le châssis (1, 14).

12. Bicyclette pliable selon titre 11, caractérisée du fait que la selle pivotante (11) oscille après désenclencher le "plier" en direction l'avant-roue (8) (en bas).
